**Europäisches Patentamt**

**European Patent Office**

**Office européen des brevets**

(19)

(11) Publication number:

**0 347 860**
**A2**

(12) ## EUROPEAN PATENT APPLICATION

(21) Application number: **89111240.1**

(22) Date of filing: **20.06.89**

(51) Int. Cl.⁴: **G05B 19/405**

(30) Priority: **20.06.88 JP 150059/88**

(43) Date of publication of application:
**27.12.89 Bulletin 89/52**

(84) Designated Contracting States:
**DE GB**

(71) Applicant: **NISSAN MOTOR CO., LTD.**
**No.2, Takara-cho, Kanagawa-ku**
**Yokohama City(JP)**

(72) Inventor: **Nishiyama, Toru**
**No. 1-7-9, Teraokita**
**Ayase City(JP)**
Inventor: **Minakami, Hiroshi**
**No. 1-1-1, Nishiterao Kanagawa-ku**
**Yokohama City(JP)**

(74) Representative: **Patentanwälte Grünecker,**
**Kinkeldey, Stockmair & Partner**
**Maximilianstrasse 58**
**D-8000 München 22(DE)**

(54) **Diagnostic method for testing data transmission normality between serially linked control units.**

(57) An indicator such as a LED or the like is pro-
vided on each of the sub-controllers which control
one or more robots and/or locators. A test signal is
sequentially applied to each of the sub-controller
units. If the response to the test signal indicates data
is being properly received, the indicator on the re-
spective sub-controller is illuminated. The test is
sequentially applied to each of the sub-controllers.
Non-illumination permits the source of the transmis-
sion malfunction to be readily ascertained.

**FIG.2**

# DIAGNOSTIC METHOD FOR TESTING DATA TRANSMISSION NORMALITY BETWEEN SERIALLY LINKED CONTROL UNITS

## BACKGROUND OF THE INVENTION

### Field of the Invention

The present invention relates generally to a robotized system and more specifically to a diagnostic technique which is utilized to establish which unit or units are not correctly receiving data transmissions in a loop network of robot operating sub-controllers.

### Description of the Prior Art

In recent times, the demand in the automotive industry for the production of small lots of a large variety of different types of vehicles is increasing.

JP-A-62-110,581 discloses an assembly system which is used in connection with the assembly of an automotive vehicle.

This system is arranged to permit small numbers of each of large number of different types of vehicle to be assembled without the need to revise the construction and arrangement of the line and to obviate the need to make a prolonged run of the same type of vehicle which vehicles must be subsequently stored pending the receipt of orders for the same.

The system includes a stage in which the body side, under body and roof panels are placed in position on a vehicle chassis by program controlled locater units which are capable of three dimensional position adjustment. In this assembly stage the requisite data needed to induce each of the locaters to move in the desired manner in the desired place and the desired time, is transmitted to each of the devices in response to a vehicle type signal which is indicative of the type of vehicle which is to be assembled in the stage. This data of course includes the positioning of the various elements and panels which are to be disposed on the basic chassis and clamped in place.

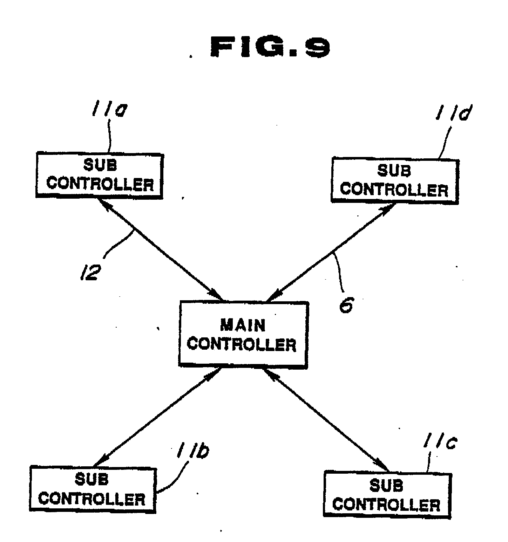

In the above described assembly stage, in order to control the large number of movements and operations performed by the locators, the system illustrated in Fig. 9 has been used. In this system a main controller 6 is arranged to transmit data relating to the amount of movement and direction in the movement each locator should undergo, to a plurality of sub-controllers 11a to 11d.

The main controller 6 is arranged to transmit both instruction and timing signals by way of cables 12. These cables 12, in order to reduce the size and bulk of the same are usually coaxial, glass fiber (light transmitting) or the like type. In this arrangement the main controller 6 is connected with each of the sub controllers by way of an independent cable.

However, this system has encountered a drawback that as the main controller is connected with each of the sub-controllers by way of a simple "star" configured network wherein one cable for each of the sub-controllers is necessary, an extremely large number of cables are required be laid out. Further, the main controller is required to have an I/O interface for each of the satellite sub-controllers and must include circuitry for switching between each of the I/O interfaces in turn. This of course increases the complexity and cost of the main controller considerably.

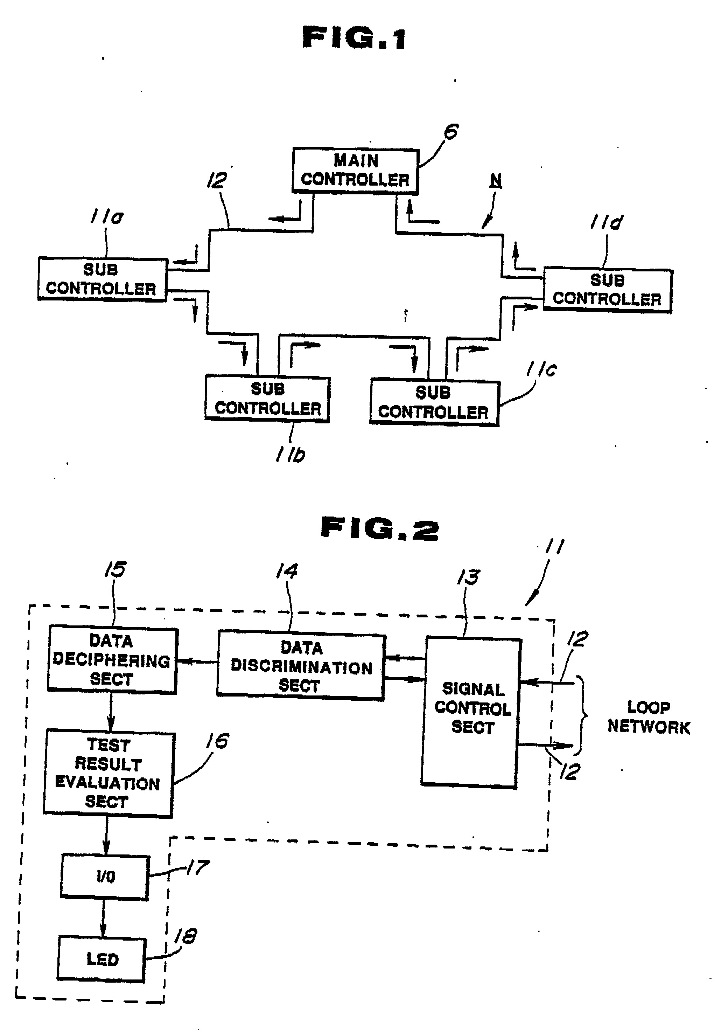

To overcome this problem it has been proposed to use a so called " daisy chain" or serial loop network connection arrangement of the nature shown in Fig. 1. This arrangement, while reducing the cable and interface requirement, has encountered the problem that, as different from the above mentioned simple star type network, it is impossible, in the case of a data transmission malfunction, to receive data feedback of the nature which permits the ready identification of the problem and its source.

Accordingly, with this loop type of system, a large amount of time is consumed in tracking down the source of the problem in the case of a transmission cable malfunction and thus can induce undesirably long production downtime. Accordingly, any benefits derived in terms of cable number reduction tends to be offset by the above mentioned difficulty.

## SUMMARY OF THE INVENTION

It is an object of the present invention to provide a diagnostic arrangement which permits the communication between each of the sub-controllers connected in a loop system, to be checked in turn and induces the illumination or activation of suitable devices provided on each of the sub-controllers in a manner which permits the ready identification of those units which are operating properly and those units which are not receiving data in the prerequisite manner.

In brief, the above object is achieved by an arrangement which features the provision of an indicator such as a LED or the like, on each of the sub-controllers which control one or more robots and/or locators; and the use of a test signal which is sequentially applied to each of the sub-controller units. If the test signal is properly received, the indicator on the respective sub-controller is suitably conditioned to indicated the reception status of the instant unit and the test is then applied to the next sub-controller in the loop.

More specifically, a first aspect of the present invention is deemed to comprise a diagnostic system for testing data transmission normality which features: a sub-controller which is connected serially in a loop circuit with a main controller, the main controller issuing control signals and a test signal, the sub-controller including: means for receiving the signals originally issued by the main controller; diagnostic means for determining, in response to the test signal, if signals are being properly received by the sub-controller; and an indicator, the indicator being operatively connected with the diagnostic means and arranged to be actuated by the diagnostic means in the event that proper signal receipt is indicated.

A second aspect of the present invention is deemed to comprise a diagnostic system for testing data transmission normality between a plurality of sub-controllers which are connected serially in a loop circuit with a main controller, which features: means disposed in the main controller for issuing control signals and a test signal; means disposed in each of the sub-controllers for receiving the signals originally issued by the main controller; diagnostic means for determining, in response to the test signal, if the signals originally issued by the main controller are being properly received by the sub-controller; and an indicator, the indicator being operatively connected with the diagnostic means and arranged to be actuated by the diagnostic means in the event that proper signal receipt is indicated.

A third aspect of the present invention is deemed to comprise a diagnostic system for testing data transmission normality which features: a main controller, the main controller being arranged to issue first and second signals; a plurality of sub-controllers, the sub-controllers being connected serially to define a loop which includes the main controller, each of the sub-controllers including: means for receiving the first and second signals; diagnostic means for comparing the first and second signals and determining if the signals are being properly received by the sub-controller; and indicator means operatively connected with the diagnostic means for producing an indication of the signal receiving status of the sub-controller.

A fourth aspect of the present invention is deemed to comprise a diagnostic system for testing data transmission normality between a plurality of sub-controllers which are connected serially in a loop circuit with a main controller, which comprises: diagnostic means in each of the sub-controllers for comparing the content of a signal issued by the main controller with a predetermined content to determine if the signal is being properly received by the sub-controller; and an indicator, the indicator being operatively connected with the diagnostic means and arranged to be actuated by the diagnostic means in a manner to indicate the signal receiving status of the sub-controller.


BRIEF DESCRIPTION OF THE DRAWINGS

Fig. 1 shows in schematic form the arrangement of a main controller and a plurality of sub-controllers which are connected in a serial daisy chain type loop network;

Fig. 2 is a black box type diagram which schematically illustrates the construction of the sub-controllers shown in Fig. 1;

Fig. 3(a) and 3(b) illustrate the signal patterns of the data which is transmitted through the network in accordance with the present invention;

Fig. 4 is a flow chart depicting the steps which are executed in the sub-controllers during the diagnostic procedure which characterizes the present invention;

Figs. 5 to 8 are views showing the type of arrangement to which the present invention is applied; and

Fig. 9 is a block diagram showing the prior controller /sub-controller connection arrangement discussed in the opening paragraphs of the instant disclosure.


DESCRIPTION OF THE PREFERRED EMBODIMENTS

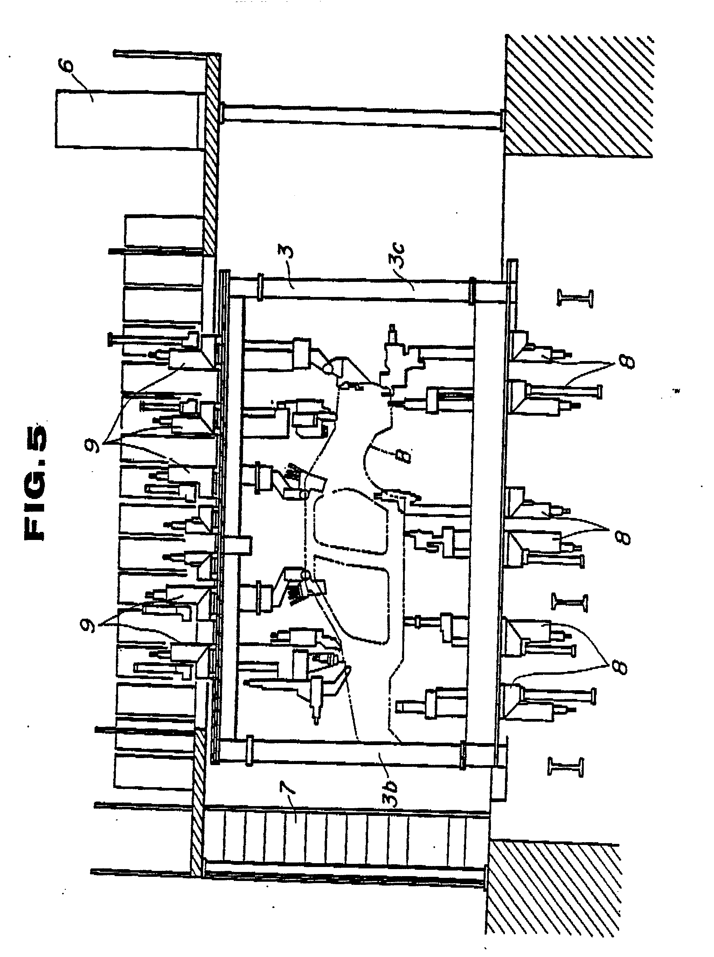

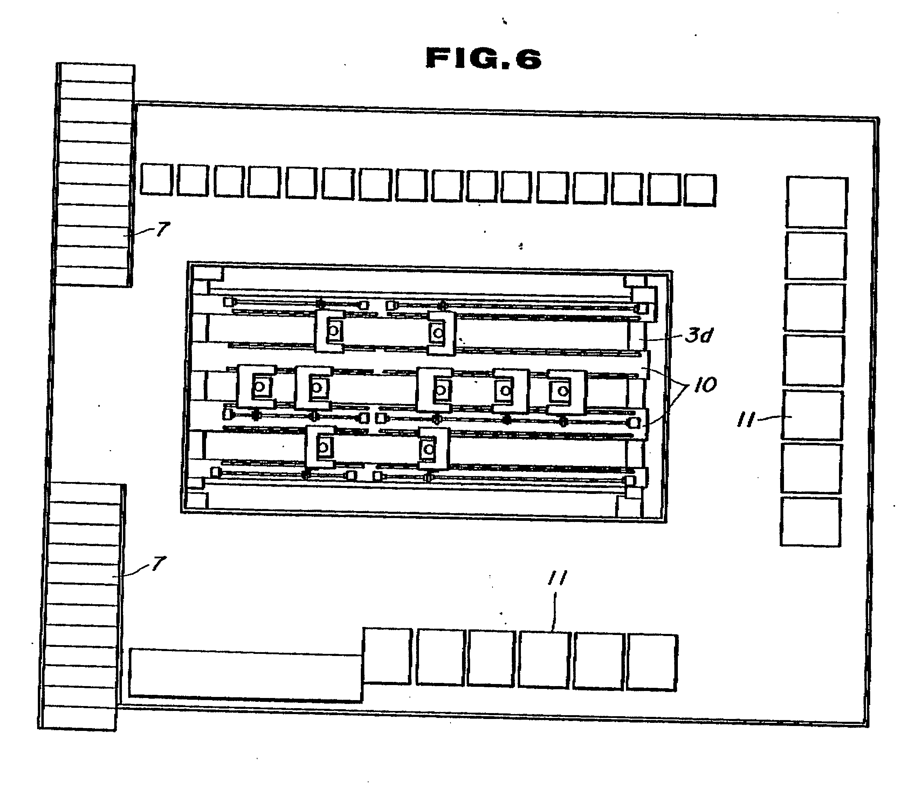

Figs. 5 to 8 show a vehicle assembly stage of the nature in which the present invention finds advantageous application. In brief, this assembly stage is such that a floor main panel, left and right body side panels, roof panel and rear panel are placed in position on a chassis, clamped and permanently connected via spot welding.

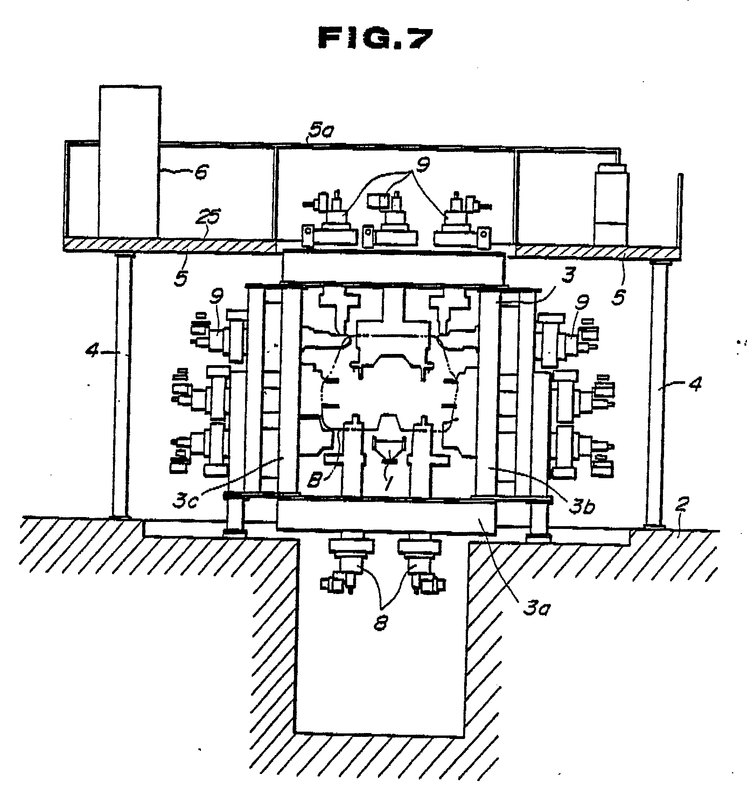

Before entering the illustrated stage wherein the body B is assembled, the main floor panel is formed by pressing and the like processing. Following its formation, this main floor panel is, as shown in Fig. 7, transported along a transfer bar 1 and introduced into the illustrated stage. The stage in this instance comprises a frame 3 which is supported on the factory floor or suitable base 2. Posts 4 support a mezzanine floor 5 above the frame 3 which floor 5 serves to support the main controller 6.

The mezzanine floor is provided with a hand rail 5a for safety. A ladder 7 is provided at one end of the stage to permit personal to climb for the purposes of inspecting the main controller 6 and the like.

As shown in Fig. 7, the frame 3 includes laterally extending structural members 3a upon which a plurality of first positioning locaters 8 are operatively mounted. These locators 8 are arranged to support and adjust the position of body B and are provided with fingers and forks elements which can be adjusted in a manner which permits the adjustment to support different size and types of chassis.

For further disclosure relating to this type of locator reference may be had to:

1. copending United States Patent Application Serial No. 07/283,158 filed on December 9, 1988 in the name of Nomaru et al, and

2. copending United States Patent Application Serial No. 07/283,546 filed on December 12, 1988 in the name of Nishiyama et al.

The content of these two applications is hereby incorporated by reference thereto.

The first of these two documents discloses a work piece support device which features two pincer member which can be moved toward and away from each other and which can be varied in length in a manner to accommodate different shaped work pieces. The device is mounted on a manipulator which selectively displaces the same in three mutually opposed directions. This document further discloses location and locking probes can used in combination with the support device to locate and/or lock the work piece in place.

The second of the two documents discloses a manipulator which features the use of a single motor and a plurality of flexible cables which are interconnected with the motor via a plurality of clutches which can be selectively engaged. The cables transmit rotational energy so the element of the manipulator via rotation/liner motion translation devices.

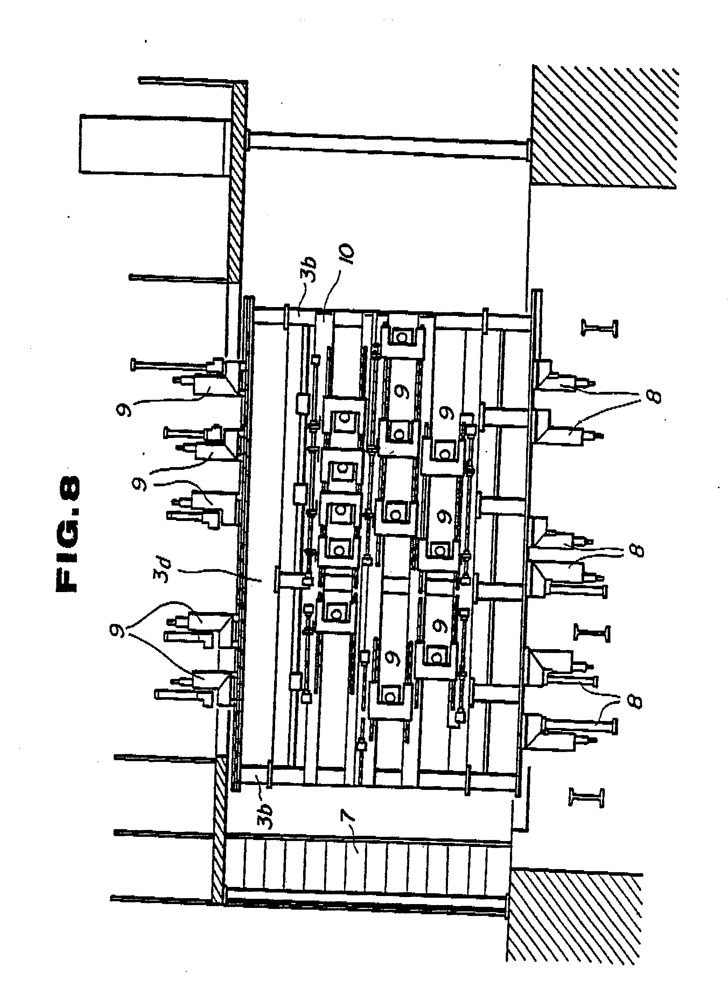

When the body B is appropriately located in the stage, work robots 9 (see Fig. 8) ar transported along fixed guides 10 to assume predetermined positions with respect to the frame 3 and the body B which is supported therein. The work robots 9 are not only located to the sides of the frame but also above the same as shown in Figs. 5 and 7 for example.

For further disclosure relating to the construction and arrangement of this type of assembly reference may be had to:

3. copending United States Patent Application Serial No. 07/215,708 filed on July 6,1988 in the name of Kawamura et al - this document discloses an arrangement which in order to accurately scan an object for the purposes of determining the dimensions, surface finish or the like, the position of the object according to the measuring system coordinate grid is determined. Using this orientation, the degree of misalignment with respect to a standard position on the grid is determined and the scanning devices which perform the actual measurement, are moved to positions which take the amount of misalignment into consideration and which assure accurate examination.

4. copending United States Patent Application Serial No. 07/215,098 filed on July 5, 1988 in the name of Endo et al - this document discloses a position detecting system which when a preselected parameter magnitude of a signal produced in response to a received reflected laser beam, is excessively high, the power of the laser it reduced until such time as a satisfactory level is reached. On the other hand, when the signal level is low and laser power cannot be increased further, signal amplification is induced until such time as the require level is reached.

5. copending United States Patent Application Serial No. 07/282,190 filed on December 9, 1988 in the name of Uemura et al - this document relates to an arrangement wherein a vehicle body is assembled in a number of stages. One of the stages determines if the required production tolerances have been met or not. Feedback control to the assembly stage is disclosed.

6. copending United States Patent Application Serial No. 07/282,189 filed on December 9, 1988 in the name of Uemura et al - this document discloses the use of an expert system is used in combination with CAD data to determine the operation of the locaters and work robots. Laser scanning is disclosed for the purposes of providing feedback control via which the robots are adjusted in a manner which reduces deviations beyond acceptable tolerances and which assists in locating difficult panels, etc.

The content of these documents is also incorporated by reference thereto.

Turning now to the check or diagnostic method which characterizes the present invention, the four sub-controllers 11a - 11d which are shown in Fig. 1 are connected by communication cables 12 in a manner to define a ring network N. Each of the sub-controllers are arranged in the manner depicted in Fig. 2. That is to say, each of the sub-controllers include, a signal control section 13; a received signal data and format discrimination section 14; a data deciphering section 15; a test result evaluation section 16; and I/O board 17 and a LED or the like type of indicator device 18 which can be activated in a manner to indicate a malfunction; all of which are operatively connected in the schematically illustrated manner.

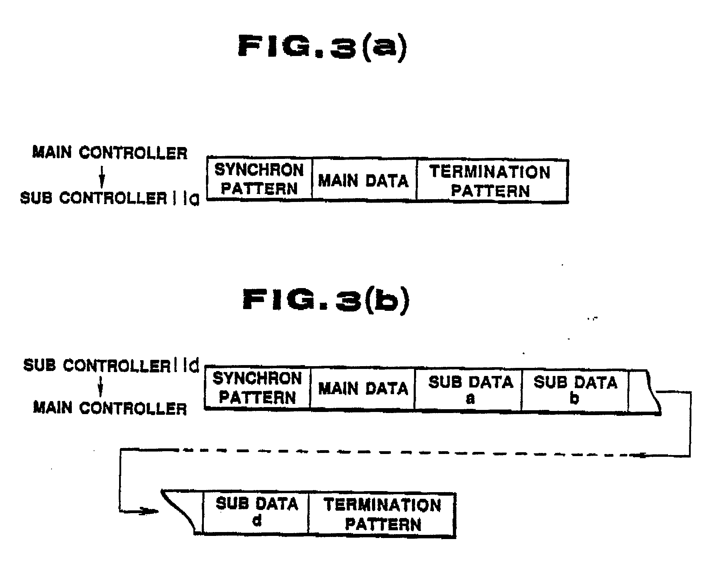

Fig. 3(a) shows the data pattern or arrangement of the command signals which are issued by the main controller 6. As shown, a main data section is arranged between a initialization or synchronization pattern and a final or termination pattern. It should be noted that content of the main data contains the locator movement and timing control information for each of the sub-controllers in turn, under normal control modes. On the other hand, when a data transmission check is carried out, this main data section contains the information necessary for executing the diagnostic control.

Fig. 3(b) shows the response data pattern which is contained in the signal fed back to the main controller 6 from the last of the serially connected sub-controllers 11d. As shown, located between the synchronization patter and the termination pattern is the sequentially compounded response data for each of the sub-controllers 11a - 11d.

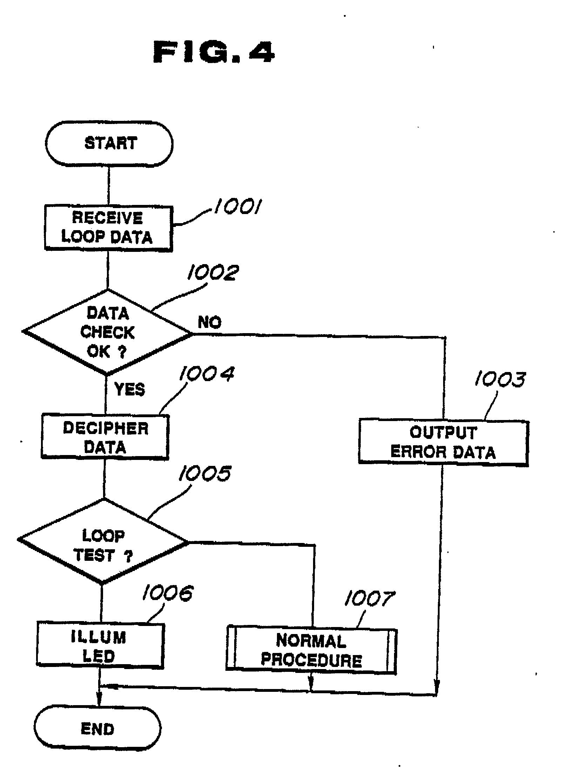

Fig. 4 depicts in flow chart form, the steps which are executed by the diagnostic technique according to the present invention in each of the sub-controllers. At step 1001 the command data which is contained in the signal issued by the main controller 6, is received by the signal control section 13 of the first sub-controller 11a. This data is transferred to the data discrimination section 13 determines if a predetermined format can be matched nor not (step 1002). In the case of a format mismatch, an error data is included in the signal which is supplied to the next sub-controller (step 1003).

On the other hand, if the a format match is indicated, then the data is transferred to the data deciphering section 15 wherein it is determined if the transferred data is compatible with the instant sub-controller (step 1004). In the event of an indication of compatibility, the results of the deciphering are transferred to the test result evaluation section 16 wherein it is determined if the results of the deciphering are contained in the communication test information or not (step 1005). In the event that the results are not found, then at step 1007 normal control routines are run. However, if requisite information is found then, at step 1006, an illumination signal is outputted via an I/O board to an LED to indicate that data is being suitably received by the instant sub-controller.

In brief, with the above described arrangement when an abnormality occurs in the communication loop, for example between sub-controllers 11c and 11d, the LED on sub-controller 11c will be illuminated while that on 11d will remain unenergized. Accordingly, the operator in attendance will be able to ascertain from the illumination/non-illumination of the LED which unit or units are not properly receiving data and can therefore quickly locate the trouble spot in the cables 12.

As will be fully appreciated, this feature enables the rapid location and repair of any cable and data related transmission problems and therefore permits the amount of downtime which tends to result from such a malfunction to be reduced drastically. The resulting improvement in production efficiency which can be achieved will be readily appreciated.

It will be appreciated that the present invention is not limited to the above described technique. For example, it is deemed within the scope of the present invention to issue the test signal twice and determined if both have been received and the same result produced by both transmissions. Alternatively, it is possible to record special data (eg. a particular code) in a ROM or the like and determine if the content of the test signal matches the data in the ROM or not. The various other modification possible are deemed to be within the perview of the skilled worker when provided with the guidance of the instant specification.

## Claims

1. A diagnostic system for testing data transmission normality comprising:
a sub-controller which is connected serially in a loop circuit with a main controller, the main controller issuing control signals and a test signal, said sub-controller including:
means for receiving the signals originally issued by said main controller;
diagnostic means for determining, in response to said test signal, if signals are being properly received by said sub-controller; and
an indicator, said indicator being operatively connected with said diagnostic means and arranged to be actuated by said diagnostic means in the event that proper signal receipt is indicated.

2. A diagnostic system for testing data transmission normality between a plurality of sub-controllers which are connected serially in a loop circuit with a main controller, comprising:
means disposed in said main controller for issuing control signals and a test signal;
means disposed in each of said sub-controllers for receiving the signals originally issued by said main controller;
diagnostic means for determining, in response to said test signal, if the signals originally issued by the main controller are being properly received by said sub-controller; and
an indicator, said indicator being operatively connected with said diagnostic means and arranged to be actuated by said diagnostic means in the event that proper signal receipt is indicated.

3. A diagnostic system for testing data transmission normality comprising:
a main controller, said main controller being arranged to issue first and second signals;
a plurality of sub-controllers, said sub-controllers being connected serially to define a loop which includes said main controller, each of said sub-controllers including:
means for receiving said first and second signals;
diagnostic means for comparing said first and second signals and determining if the signals are being properly received by said sub-controller; and
indicator means operatively connected with said diagnostic means for producing an indication of the signal receiving status of the sub-controller.

4. A diagnostic system for testing data transmission normality between a plurality of sub-controllers which are connected serially in a loop circuit with a main controller, comprising:
diagnostic means in each of said sub-controllers for comparing the content of a signal issued by the main controller with a predetermined content to determine if the signal is being properly received by the sub-controller; and
an indicator, said indicator being operatively connected with said diagnostic means and arranged to be actuated by said diagnostic means in a manner to indicate the signal receiving status of the sub-controller.

107-89

# FIG.1

# FIG.2

# FIG.3(a)

MAIN CONTROLLER
↓
SUB CONTROLLER||d

| SYNCHRON PATTERN | MAIN DATA | TERMINATION PATTERN |
|---|---|---|

# FIG.3(b)

SUB CONTROLLER||d
↓
MAIN CONTROLLER

| SYNCHRON PATTERN | MAIN DATA | SUB DATA a | SUB DATA b | |
|---|---|---|---|---|

| SUB DATA d | TERMINATION PATTERN |
|---|---|

# FIG. 4

# FIG.5

EP 0 347 860 A2

# FIG.6

7

7

3d

10

11

11

EP 0 347 860 A2

# FIG.7

**FIG.8**

# FIG.9